# EUROPÄISCHE PATENTANMELDUNG

(11) **EP 1 525 905 A1**
(43) Veröffentlichungstag der Anmeldung: **27.04.2005**
(21) Anmeldenummer: 04024872.6
(22) Anmeldetag: 19.10.2004
(51) Int. Cl.: A63B 21/045, A63B 21/02, B23P 19/02

(54) **Vorrichtung und Verfahren zur Herstellung eines Trainingsgeräts**

(30) Priorität: 24.10.2003 DE 10349767
(71) Anmelder: Klein, Frank, 81669 München (DE)
(72) Erfinder: Klein, Frank, 81669 München (DE)
(74) Vertreter: Schiffer, Axel Martin (DE)

(57) **Zusammenfassung**

Die Erfindung betrifft eine Vorrichtung zur Herstellung eines Trainingsgeräts, das einen flexiblen Stab und ein Griffelement mit einer Durchgangsöffnung aufweist, welches zum form- und kraftschlüssigen Eingriff des Stabs mit der Durchgangsöffnung wenigstens teilweise aus einem elastischen Material gebildet ist, mit einer Fixiereinrichtung, in die der Stab wenigstens teilweise einführbar ist und die eine Abstützeinrichtung zur Aufnahme von axialen Kräften beim Aufbringen des Griffelements auf den flexiblen Stab aufweist, wobei die Fixiereinrichtung so ausgebildet ist, dass ein seitliches Ausbrechen des Stabs beim Aufbringen des Griffelements vermieden wird. Die Erfindung betrifft in einem zweiten Aspekt ein Verfahren zur Herstellung eines Trainingsgeräts.

## Beschreibung

Die vorliegende Erfindung betrifft eine Vorrichtung und ein Verfahren zur Herstellung eines Trainingsgeräts, das als wesentliche Komponenten einen flexiblen Stab und ein Griffelement aufweist.

Derartige Trainingsgeräte sind beispielsweise aus DE 101 27 319 A1, DE 201 11 969 U1 und DE 201 07 410 U1 bekannt und werden im Fitness- und Freizeitbereich, in Sport- und Aerobic-Studius ebenso eingesetzt, wie in der Physiotherapie.

Im Zusammenhang mit der Herstellung solcher Trainingsgeräte ist in DE 101 27 319 A1 beschrieben, dass ein mit einer Bohrung versehener Griff über den flexiblen Stab gezogen wird. Auf eine Fixierung des Griffs mit Hilfe eines Klebers kann verzichtet werden, wenn die Spannkraft des Materials, aus dem der Griff gebildet ist, ausreicht, um den Griff an der erreichten Position zu halten. Es hat sich allerdings herausgestellt, dass ein manuelles Aufbringen von Griffelementen, die für den praktischen Gebrauch hinreichend fest mit dem Stab verbunden sind, den Einsatz sehr hoher Kräfte erfordert.

Die Anwendung solch großer Kräfte, die in Axialrichtung des Stabs angewendet werden müssen, birgt die Gefahr eines seitlichen Ausweichens oder Ausbrechens des Stabs. Dies ist einerseits für die praktische Durchführung unpraktisch und hinderlich und bringt zum anderen eine nicht unerhebliche Unfallgefahr mit sich.

Andererseits stellt die Verwendung von Griffelementen aus Materialien mit eventuell geringerer Spannkraft keine Alternative dar, da solche Griffelemente beim Gebrauch sehr leicht auf dem Stab verrutschen.

**Aufgabe** der Erfindung ist es, eine Vorrichtung und ein Verfahren zu schaffen, mit denen Trainingsgeräte der vorstehend angegebenen Art zuverlässig, sicher und effizient hergestellt werden können. Die hergestellten Trainingsgeräte sollen sich außerdem durch einen besonders zuverlässigen Sitz des Griffelements auf dem flexiblen Stab auszeichnen.

Diese Aufgabe wird durch die Vorrichtung mit den Merkmalen des Anspruchs 1 und durch das Verfahren mit den Merkmalen des Anspruchs 16 gelöst.

Vorteilhafte Ausgestaltungen der erfindungsgemäßen Vorrichtung und Weiterbildungen des erfindungsgemäßen Verfahrens sind Gegenstand der Unteransprüche.

Gegenstand der Erfindung ist demnach eine Vorrichtung zur Herstellung eines Trainingsgeräts, das einen flexiblen Stab und ein Griffelement mit einer Durchgangsöffnung aufweist, welches zum form- und kraftschlüssigen Eingriff des Stabs mit der Durchgangsöffnung wenigstens teilweise aus einem elastischen Material gebildet ist, mit einer Fixiereinrichtung, in die der Stab wenigstens teilweise einführbar ist und die eine Abstützeinrichtung zur Aufnahme von axialen Kräften beim Aufbringen des Griffelements auf den flexiblen Stab aufweist, wobei die Fixiereinrichtung so ausgebildet ist, dass ein seitliches Ausbrechen des Stabs beim Aufbringen des Griffelements vermieden wird.

Als erster Kerngedanke der Erfindung kann angesehen werden, bei der Vorrichtung eine Fixiereinrichtung für den flexiblen Stab vorzusehen, in die ein Ende des Stabs bei der Herstellung eingeführt wird und die ein seitliches Ausweichen oder Ausbrechen des Stabs beim Aufbringen oder Aufschieben des Griffelements bzw. beim Durchstoßen des Griffelements mit dem Stab vermeidet.

Ein weiterer Kerngedanke der Erfindung kann darin gesehen werden, bei der Fixiereinrichtung außerdem eine Abstützeinrichtung vorzusehen, mit der die auf den Stab aufgebrachten axialen Kräfte beim Aufschieben oder Aufziehen des Griffelements aufgenommen bzw. abgestützt werden können.

Die erfindungsgemäße Vorrichtung ermöglicht erhebliche Fortschritte bei der Sicherheit und Schnelligkeit der Herstellung der Trainingsgeräte. Weiterhin erlaubt die Fixiereinrichtung mit der Abstützeinrichtung eine sehr definierte Kraftanwendung, so dass die Griffelemente sehr präzise bis zu dem gewünschten Ort auf dem Stab aufgebracht werden können.

Mit der erfindungegemäßen Vorrichtung können insbesondere Griffelemente gegen sehr hohe Reibungskräfte auf den Stab aufgebracht werden. Dies bedeutet, dass die Radien der Durchgangsöffnungen der verwendeten Griffelemente entsprechend klein und/oder dass die Reibungskoeffizienten zwischen Griffelement und Stab entsprechend hoch sind. Für solche Griffelemente kann ein Verrutschen im Gebrauch praktisch ausgeschlossen werden.

Bei dem Verfahren zur Herstellung eines Trainingsgeräts der vorstehend genannten Art wird der flexible Stab in eine Fixiereinrichtung eingeführt, bis er mit einer Abstützeinrichtung in Eingriff kommt, weiterhin wird das Griffelement auf den Stab aufgebracht, bis eine Mittenposition erreicht ist, wobei der Stab die Durchgangsöffnung durchdringt, wobei Kräfte in Axialrichtung von der Abstützeinrichtung abgestützt werden und wobei ein seitliches Ausbrechen des flexiblen Stabs durch die Fixiereinrichtung verhindert wird.

Bei einer besonders einfachen Ausgestaltung der erfindungsgemäßen Vorrichtung, bei der gleichwohl ein zuverlässiges Abstützen der axialen Kräfte gewährleistet ist, ist die Abstützeinrichtung als axialer Anschlag ausgebildet.

Ein seitliches Ausbrechen kann in konstruktiv einfacher Weise verhindert werden, wenn die Fixiereinrichtung eine erste Aufnahmeeinrichtung aufweist, in die der Stab wenigstens teilweise einführbar ist.

Zweckmäßig kann dabei die erste Aufnahmeeinrichtung als Bohrung, insbesondere als Sacklochbohrung, in einem ersten Aufnahmekörper ausgebildet sein.

Eine besonders definierte Führung des Stabs kann erreicht werden, wenn die erste Aufnahmeeinrichtung zum formschlüssigen Aufnehmen des Stabs ausgebildet ist. Außerdem kann dann ein seitliches Ausbrechen des Stabs besonders zuverlässig verhindert werden.

Um praktisch über die volle Länge des Stabs ein seitliches Ausbrechen beim Aufbringen des Griffelements zu verhindern, weist die Fixiereinrichtung bevorzugt eine zweite Aufnahmeeinrichtung auf, in die der erste Aufnahmekörper wenigstens teilweise einführbar ist.

In einer besonders einfachen Ausgestaltung kann diese zweite Aufnahmeeinrichtung eine axial durchgehende Ausnehmung in einem zweiten Aufnahmekörper aufweisen.

Zweckmäßig sind dabei die erste Aufnahmeeinrichtung und die zweite Aufnahmeeinrichtung gegeneinander verschiebbar angeordnet.

In konstruktiv unaufwändiger Weise kann dies erreicht werden, wenn der erste Aufnahmekörper auf einer Schieneneinrichtung verschiebbar gelagert ist.

Prinzipiell kann zur Herstellung des Trainingsgeräts der erste Aufnahmekörper mit der Abstützeinrichtung von Hand gegenüber dem Griffelement bewegt werden. Vorteilhaft ist aber zum linearen Bewegen der Abstützeinrichtung gegenüber dem Griffelement eine Antriebseinrichtung vorgesehen.

Bei einer einfachen Variante ist der erste Aufnahmekörper als Zahnstange ausgebildet, zu deren Antrieb ein geeignetes Zahnrad, gegebenenfalls mit einem Getriebe, vorgesehen ist.

Zum Antrieb kann dann im einfachsten Fall eine Handkurbel dienen, es kann aber auch ein Elektromotor vorgesehen sein.

Auch pneumatische und hydraulische Antriebe sind möglich.

Ein zuverlässiger Verfahrensablauf wird sichergestellt, wenn die zweite Aufnahmeeinrichtung zur formschlüssigen Aufnahme des ersten Aufnahmekörpers ausgebildet ist.

Bei einer weiteren bevorzugten Ausgestaltung der Erfindung ist eine Positioniereinrichtung für das Griffelement vorgeehen. Die Endposition des Griffelements kann dann definiert eingestellt oder gegebenenfalls für unterschiedliche Stablängen oder unterschiedlich große Griffelemente angepasst werden.

Um gegebenenfalls an den Enden des Stabs Endstücke aufbringen zu können, die sowohl eine Schutzfunktion aufweisen, als auch das Schwingungsverhalten des Stabs durch ihr Gewicht beeinflussen, können entsprechende Positioniereinrichtungen vorgesehen sein.

Zweckmäßig ist zur Abstützung von auf das Griffelement ausgeübten axialen Kräften weiterhin eine zweite Abstützeinrichtung vorgesehen, insbesondere ein zweites Anschlagselement, mit einer Öffnung für den Durchtritt des Stabs. Diese zweite Abstützeinrichtung kann insbesondere in konstruktiver Einheit mit der Positioniereinrichtung für das Griffelement ausgebildet sein.

Bei der Herstellung des Trainingsgeräts wird das Griffelement dann mittels der Positioniereinrichtung festgehalten und der Stab wird relativ zum Griffelement bewegt, wobei auf das Griffelement ausgeübt axiale Kräfte von der zweiten Abstützeinrichtung abgestützt werden.

Eine weitere Vereinfachung des Herstellungsverfahrens kann erzielt werden, wenn bei der Vorrichtung die wesentlichen Aufnahmekomponenten, durch die der Stab bisher hindurchgesteckt werden musste, aufklappbar ausgestaltet sind. Insbesondere ist daher zweckmäßig, wenn der erste und der zweite Aufnahmekörper ebenso wie die Positioniereinrichtung für das Griffelement und/oder das zweite Anschlagelement aufklappbar ausgestaltet ist. Zu Beginn des Herstellvorgangs müss der Stab dann nicht mehr in axialer Richtung eingeschoben, sondern kann beispielsweise von oben eingesetzt werden. Hierdurch kann auch der Platzbedarf für die Vorrichtung reduziert werden.

Die Erfindung betrifft außerdem ein Trainingsgerät mit einem flexiblen Stab und einem darauf angebrachten Griffelement, das nach dem erfindungsgemäßen Verfahren hergestellt ist.

Um die Schwingungfrequenz des Stabs zu verändern und/oder um eine Schutzfunktion zu erzielen, sind an den Enden des flexiblen Stabs bevorzugt Endstücke vorgesehen.

Diese Endstücke, die beispielsweise aus Vollgummi oder einem ähnlichen Material geformt sein können, können prinzipiell durch einfaches Aufstecken auf den flexiblen Stab fixiert werden.

Wenn die Endstücke so eng an dem flexiblen Stab anliegen, dass eine luftdichte Verbindung entsteht, werden die Endstücke außerdem durch den Luftdruck an dem flexiblen Stab gehalten.

Um ein unerwünschtes Ablösen der Endstücke von dem flexiblen Stab, insbesndere während des Trainings, bei dem die Endbereiche des Stabs aufgrund der Schwingungen nicht unerheblichen Beschleunigungen ausgesetzt sind, möglichst zuverlässig zu vermeiden, sind die Endstücke nicht austauschbar an den Enden des flexiblen Stabs befestigt.

Dies kann beispielsweise durch eine im Endbereich des Stabs eingebrachte umlaufende Nut und einen dort angelegten Spreng- oder Federring bewerkstelligt werden. Weiterhin können der Endbereich des Stabs und das aufzubringende Endstück in ihrer Form so ausgebildet sein, dass im aufgesteckten Zustand ein formschlüssiger hintergreifender Eingriff, etwa in der Art von Widerhaken, gegeben ist.

Außerdem oder zusätzlich kann das Endstück mit dem flexiblen Stab verklebt werden. Die Festigkeit einer solchen Klebeverbindung kann außerdem durch vorausgehendes Aufrauen der zu verklebenden Flächen erhöht werden.

Insgesamt werden so äußerst stabile und haltbare Verbindungen erzielt, die insbesondere auch so ausgebildet werden können, dass die Endstücke nur unter Zerstörung von dem flexiblen Stab getrennt werden können. Damit ist den Sicherheitsanforderungen auch für extreme Trainingsund Übungssituationen Genüge getan.

Weitere Vorteile und Merkmale der Erfindung werden nachstehen unter Bezugnahme auf die beigefügten schematischen Figuren beschrieben. Dort zeigen:
- Fig. 1: eine schematische Seitenansicht eines Ausführungsbeispiels der erfindungsgemäßen Vorrichtung in einer Ausgangsposition;
- Fig. 2: eine schematische Seitenansicht der Vorrichtung aus Fig. 1 in einer Zwischenposition;
- Fig. 3: eine schematische Seitenansicht der Vorrichtung aus Fig. 1 in einer Endposition;
- Fig. 4: eine Schnittansicht entlang der Linien 4 - 4 in Fig. 1;
- Fig. 5: eine Schnittansicht entlang der Linien 5 - 5 in Fig. 2;
- Fig. 6: eine Schnittansicht entlang der Linien 6 - 6 in Fig. 3 und
- Fig. 7: ein mit dem erfindungsgemäßen Verfahren und der erfindungsgemäßen Vorrichtung hergestelltes Trainingsgerät.

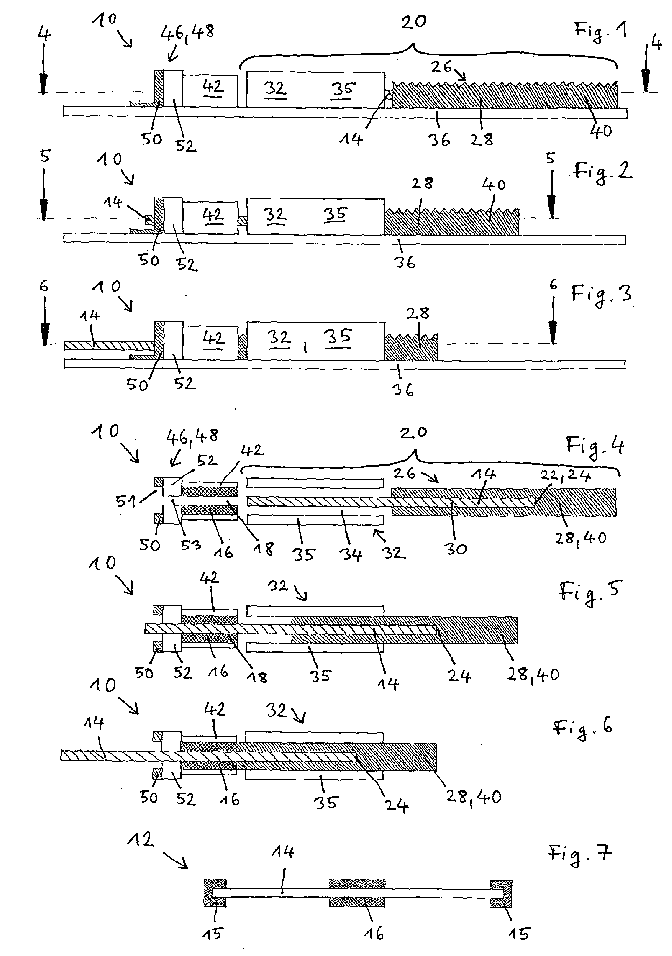

Die Herstellung eines Trainingsgeräts 12, das beispielhaft schematisch in Fig. 7 dargestellt ist, wird nachstehend mit Bezug auf die Fig. 1 bis 3 bzw. 4 bis 6 erläutert.

Äquivalente Komponenten sind jeweils mit denselben Bezugszeichen gekennzeichnet.

Dargestellt ist in den Figuren jeweils eine erfindungsgemäße Vorrichtung 10, die als wesentliche Komponenten eine Fixiereinrichtung 20 mit einer Abstützeinrichtung 22, eine Positioniereinrichtung 42 für ein Griffelement 16 des Trainingsgeräts 12 und eine zweite Abstützeinrichtung 46 aufweist. Diese Komponenten, die nachstehend im Detail beschrieben werden, sind auf einer Schiene 36 fest oder verschiebbar angeordnet.

Die Fixiereinrichtung 20 besteht bei dem gezeigten Ausführungsbeispiel aus einer ersten, auf der Schiene 36 in Längsrichtung verschiebbar angeordneten ersten Aufnahmeeinrichtung 26 und einer auf der Schiene 36 fest montierten zweiten Aufnahmeeinrichtung 32. Die erste Aufnahmeeinrichtung 26 weist einen als Zahnstange 40 ausgebildeten Aufnahmekörper 28 auf. In diesen Aufnahmekörper 28 ist eine Sacklochbohrung 30 zur Aufnahme eines Stabs 14 des Trainingsgeräts 12 eingearbeitet. Das Ende dieser Sacklochbohrung 30 wirkt als axialer Anschlag 48 und damit erfindungsgemäß als Abstützeinrichtung 22 zur Aufnahme von axialen Kräften beim Aufbringen des Griffelements 16 auf den flexiblen Stab 14.

Um eine besonders zuverlässige Führung des Stabs 14 in der Bohrung 30 zu gewährleisten und um ein seitliches Ausbrechen beim Einschieben des Stabs 14 in das Griffelement 16 besonders zuverlässig zu verhindern, ist die Bohrung 30 so ausgebildet, dass der Stab 14 darin formschlüssig aufgenommen werden kann.

Die auf der Schiene 36 fest montierte zweite Aufnahmeeinrichtung 32 ist im gezeigten Ausführungsbeispiel als zweiter Aufnahmekörper 35 mit einer axial durchgehenden Ausnehmung 34 verwirklicht. In diese Ausnehmung 34 ist der auf der Schiene 36 verschiebbar angeordnete erste Aufnahmekörper, wie in den Fig. 5 und 6 dargestellt, formschlüssig einschiebbar.

Die Positioniereinrichtung 42 für das Griffelement 16 ist im vorliegenden Fall als ein auf der Schiene 36 fest montiertes Rohrstück ausgebildet, in das ein Griffelement 16 in Axialrichtung eingeschoben werden kann.

Ebenfalls fest positioniert bezüglich der Schiene 36 ist eine zweite Abstützeinrichtung 46 zum Abstützen von axialen Kräften, die beim Durchstoßen des Stabs 14 durch das Griffelement entstehen. Die zweite Abstützeinrichtung 46 ist dabei ebenfalls als axiales Anschlagelement 48 ausgebildet.

Das Anschlagelement 48 ist aus einem auf der Schiene 36 fest montierten aber prinzipiell verstellbaren Anschlag 50 und einem entfernbaren Abstandsstück 52 aufgebaut. Beide Komponenten sind mit Öffnungen 51, 53 für den Durchtritt des Stabs 14 versehen. Die Öffnung 51 des verschiebbaren Anschlags 50 gestattet darüber hinaus ein Hindurchschieben eines Griffelements 16 zu Beginn des Herstellungsvorgangs.

Die Funktionsweise der erfindungsgemäßen Vorrichtung 10 und das erfindungsgemäße Herstellungsverfahren werden im Folgenden erläutert.

Zu Beginn des Herstellungsvorgangs wird die Vorrichtung in den in den Fig. 1 und 4 gezeigten Zustand gebracht. Im Wesentlichen wird also der erste Aufnahmekörper 28 auf der Schiene 36 relativ zur zweiten Aufnahmeeinrichtung 32 in einen maxial ausgefahrenen Zustand, in den Figuren also ganz nach rechts gebracht. Das Abstandsstück 52 wird dann herausgenommen.

Anschließend wird ein Stab 14 für ein herzustellendes Trainingsgerät 12 durch die Öffnung 51 im verschiebbaren Anschlag 50, durch die Positioniereinrichtung 42 für das Griffelement 16 und durch die Ausnehmung 34 im Aufnahmekörper 35 hindurch in die Bohrung 30 des ersten Aufnahmekörpers 28 eingeführt, bis ein Ende des Stabs 14 am Ende der Bohrung 30, d.h. an dem axialen Anschlag 24 anstößt. Danach wird durch die Öffnung 51 des verschiebbaren Anschlags ein Griffelement 16 in die Positioniereinrichtung 42 eingeführt. Schließlich wird das Abstandsstück 52 wieder zwischen den verschiebbaren Anschlag 50 und der Positioniereinrichtung 42 eingesetzt.

Das Griffelement 16 ist aus Naturkautschuk gebildet. Hierbei handelt es sich um ein hautfreundliches, nicht gesundheitsschädliches Material. Ein eventuell zu Anfang vorhandener Geruch ist ebenfalls nicht gesundheitsschädlich und verflüchtigt sich rasch. Auch ein sich eventuell auf der Oberfläche bildender weißlicher Film ist unproblematisch. Die äußeren Abmessungen des Griffelements 16 sind so gewählt, dass es bequem mit einer Hand oder mit beiden Händen gehalten werden kann. Prinzipiell sind unterschiedliche Durchmesser des Griffelements 16, beispielsweise für Frauen und Männer oder für Kinder und Erwachsene, möglich. Der Durchmesser der Durchgangsöffnung 18 des Griffelements 16 ist gerade so gewählt, dass einerseits ein Durchstoßen oder Durchschieben des Stabs 14 durch das Griffelement 16 mit der erfindungsgemäßen Vorrichtung 10 bequem möglich ist und andererseits das Griffelement 16 auf dem fertig hergestellten Trainingsgerät 12 auch bei extremer Beanspruchung nicht verrutscht. Auch bezüglich des Verrutschens hat sich der Einsatz von Naturkautschuk für das Griffelement 16 bewährt, da dieses Material gegenüber den meisten glatten Oberflächen hohe Reibungskoeffizienten aufweist.

Als Material für den flexiblen Stab 14 kommen prinzipiell alle elastischen Materialien, die die gewünschten Eigenschaften aufweisen, beispielsweise sämtliche in DE 101 27 319 A1 beschriebenen Materialien, in Betracht. Insbesondere können Stäbe aus Fiberglas oder glasfaserverstärktem Kunststoff (GFK) verwendet werden.

Das Einschieben bzw. Durchdrücken des Stabs 14 durch das Griffelement 16 kann nun beginnen.

Hierzu wird der erste Aufnahmekörper 28, der als Zahnstange 40 ausgebildet ist, mit Hilfe einer nicht dargestellten Antriebseinrichtung, bei der es sich im einfachsten Fall um ein mit einer Handkurbel angetriebenes Zahnrad handeln kann, auf der Schiene 36 in die Ausnehmung 34 des zweiten Aufnahmekörpers 35 hineinbewegt. Diese Situation ist in den Fig. 2 und 5 dargestellt. Das linke Ende des Stabs 14 tritt dann durch die Öffnung 18 des Griffelements 16 hindurch, wobei axiale Kräfte einerseits von dem axialen Anschlag 34 und andererseits von dem Abstandsstück 52 und dem verschiebbaren Anschlag 50 aufgenommen werden.

Diese Bewegung des ersten Aufnahmekörpers wird solange fortgesetzt, bis der in den Fig. 3 und 6 dargestellte Zustand erreicht ist, d.h. bis der Aufnahmekörper 28 am Griffelement 16 anstößt. In dem in den Fig. gezeigten Fall ist die Länge der Bohrung 30 im ersten Aufnahmekörper 28 genau auf eine bestimmte Größe des Trainingsgeräts 12, d.h. auf eine bestimmte Länge des Stabs 14 abgestimmt. Prinzipiell kann zwischen der zweiten Aufnahmeeinrichtung und der Positioniereinrichtung 42 für das Griffelement 16 eine weitere Anschlageinrichtung für den ersten Aufnahmekörper 28 zur Begrenzung der Bewegung vorgesehen werden.

Die Herstellung des Trainingsgeräts 12 ist dann abgeschlossen und das Trainingsgerät 12 kann nach vorheriger Entfernung des Abstandsstücks 52 aus der Vorrichtung 10 herausgezogen werden.

Falls gewünscht können auf die Enden des flexiblen Stabs 14 noch Endstücke 15 aufgebracht werden, die zum einen durch ihr Gewicht das Schwingungsverhalten des Trainingsgeräts 12 beeinflussen und zum anderen eine Schutzfunktion ausüben.

Ein fertig hergestelltes Trainingsgerät 12 mit einem Stab 14, einem mittig darauf angebrachten Griffelement 16 sowie mit Endstücken 15 ist schematisch in Fig. 7 dargestellt. - Die Endstücke 15 werden bevorzugt aus demselben Material wie das Griffelement 16, d.h. aus Naturkautschuk gefertigt, wobei die Eintrittsöffnung für den Stab 14 so dimensioniert ist, dass die Endstücke 15 aufgrund der Elastizität des Materials und der Reibung zwischen den Materialien auf dem Stab 14 gehalten werden. Der Stab ist aus einem glasfaserverstärkten Kunststoff gefertigt, der in einem speziellen Verfahren und Mischungsverhältnis hergestellt wird, damit eine geeignete Schwingungsfrequenz bereitgestellt wird.

Prinzipiell können diese Endstücke 15 von Hand aufgesteckt werden. Es ist aber auch möglich, auf der Schiene 36 Positioniereinrichtungen für die Endstücke 15 vorzusehen. Beispielsweise kann eine erste Positioniereinrichtung für ein Endstück in der ersten Aufnahmeeinrichtung 26 integriert sein.

Eine weitere Positioniereinrichtung für ein Endstück 15 kann verschiebbar auf der Schiene 36 in dem in den Fig. gezeigten Beispiel links angeordnet sein. Bei einer solchen Vorrichtung würden dann in einem Arbeitsgang der Stab 14 durch das Griffelement 16 und außerdem die Endstücke 15 auf die Enden des Stabs 14 gedrückt werden.

Die mit dem erfindungsgemäßen Verfahren bzw. mit der erfindungsgemäßen Vorrichtung hergestellten Trainigsgeräte weisen für die Praxis hervorragende Eigenschaften auf. Insbesondere sind die Trainingsgeräte erfindungsgemäß zuverlässig, sicher und vor allem auch effizient, d.h. kostengünstig, herstellbar. Bei den erfindungsgemäß hergestellten Trainigsgeräten ist ein zuverlässiger Sitz des Griffelements und gegebenenfalls der Endstücke im Gebrauch gewährleistet und ein Verrutschen bzw. ein Ablösen praktisch ausgeschlossen.

## Patentansprüche

1. Vorrichtung zur Herstellung eines Trainingsgeräts (12), insbesondere zur Durchführung des Verfahrens nach einem der Ansprüche 16 oder 17, wobei das Trainingsgerät (12 einen flexiblen Stab (14) und ein Griffelement (16) mit einer Durchgangsöffnung (18) aufweist, welches zum form- und kraftschlüssigen Eingriff des Stabs (14) mit der Durchgangsöffnung (18) wenigstens teilweise aus einem elastischen Material gebildet ist,
mit einer Fixiereinrichtung (20), in die der Stab (14) wenigstens teilweise einführbar ist und die eine Abstützeinrichtung (22) zur Aufnahme von axialen Kräften beim Aufbringen des Griffelements (16) auf den flexiblen Stab (14) aufweist,
wobei die Fixiereinrichtung (20) so ausgebildet ist, dass ein seitliches Ausbrechen des Stabs (14) beim Aufbringen des Griffelements (16) vermieden wird.

2. Vorrichtung nach Anspruch 1,
**dadurch gekennzeichnet,**
**dass** die Abstützeinrichtung (22) als axialer Anschlag (24) ausgebildet ist.

3. Vorrichtung nach einem der Ansprüche 1 oder 2,
**dadurch gekennzeichnet,**
**dass** die Fixiereinrichtung (20) eine erste Aufnahmeeinrichtung (26) aufweist, in die der Stab (14) wenigstens teilweise einführbar ist.

4. Vorrichtung nach Anspruch 3,
**dadurch gekennzeichnet,**
**dass** die erste Aufnahmeeinrichtung (26) als Bohrung (30), insbesondere als Sacklochbohrung, in einem ersten Aufnahmekörper (28) ausgebildet ist.

5. Vorrichtung nach einem der Ansprüche 3 oder 4,
**dadurch gekennzeichnet,**
**dass** die erste Aufnahmeeinrichtung (26) zum formschlüssigen Aufnehmen des Stabs (14) ausgebildet ist.

6. Vorrichtung nach einem der Ansprüche 4 oder 5,
**dadurch gekennzeichnet,**
**dass** die Fixiereinrichtung (20) eine zweite Aufnahmeeinrichtung (32) aufweist, in die der erste Aufnahmekörper (28) wenigstens teilsweise einführbar ist.

7. Vorrichtung nach Anspruch 6,
**dadurch gekennzeichnet,**
**dass** die zweite Aufnahmeeinrichtung (32) eine axial durchgehende Ausnehmung (34) in einem zweiten Aufnahmekörper (35) aufweist.

8. Vorrichtung nach einem der Ansprüche 6 oder 7,
**dadurch gekennzeichnet,**
**dass** die erste Aufnahmeeinrichtung (26) und die zweite Aufnahmeeinrichtung (32) gegeneinander verschiebbar angeordnet sind.

9. Vorrichtung nach einem der Ansprüche 4 bis 8,
**dadurch gekennzeichnet,**
**dass** der erste Aufnahmekörper (28) auf einer Schieneneinrichtung (36) verschiebbar gelagert ist.

10. Vorrichtung nach einem der Ansprüche 1 bis 9
**dadurch gekennzeichnet,**
**dass** zum linearen Bewegen der Abstützeinrichtung (22) gegenüber dem Griffelement (16) eine Antriebseinrichtung (38) vorgesehen ist.

11. Vorrichtung nach einem der Ansprüche 4 bis 10,
**dadurch gekennzeichnet,**
**dass** der erste Aufnahmekörper (28) als Zahnstange (40) ausgebildet ist.

12. Vorrichtung nach einem der Ansprüche 6 bis 11,
**dadurch gekennzeichnet,**
**dass** die zweite Aufnahmeeinrichtung (32) zur formschlüssigen Aufnahme des ersten Aufnahmekörpers (28) ausgebildet ist.

13. Vorrichtung nach einem der Ansprüche 1 bis 12,
**dadurch gekennzeichnet,**
**dass** eine Positioniereinrichtung (42) für das Griffelement (16) vorgesehen ist.

14. Vorrichtung nach einem der Ansprüche 1 bis 13,
**dadurch gekennzeichnet,**
**dass** für auf den Stab endseitig aufzubringende Endstücke Positioniereinrichtungen (44) vorgesehen sind.

15. Vorrichtung nach einem der Ansprüche 1 bis 14,
**dadurch gekennzeichnet,**
**dass** zur Abstützung von auf das Griffelement (16) ausgeübten axialen Kräften eine zweite Abstützeinrichtung (46), insbesondere ein zweites Anschlagselement (48), mit einer Öffnung (54) für den Durchtritt des Stabs (14), vorgesehen ist.

16. Verfahren zur Herstellung eines Trainingsgeräts (12), das einen einen flexiblen Stab (14) und ein Griffelement (16) mit einer Durchgangsöffnung (18) aufweist, welches zum form- und kraftschlüssigen Eingriff des Stabs (14) mit der Durchgangsöffnung (18) wenigstens teilweise aus einem elastischen Material gebildet ist,
bei dem der flexible Stab (14) in eine Fixiereinrichtung (20) eingeführt wird, bis er mit einer Abstützeinrichtung (22) in Eingriff kommt,
bei dem das Griffelement (16) auf den Stab (14) aufgebracht wird, bis eine Mittenposition erreicht ist,
wobei der Stab (14) die Durchgangsöffnung (18) durchdringt,
wobei Kräfte in Axialrichtung von der Abstützeinrichtung (22) abgestützt werden und
wobei ein seitliches Ausbrechen des flexiblen Stabs (14) durch die Fixiereinrichtung (20) verhindert wird.

17. Verfahren nach Anspruch 16,
**dadurch gekennzeichnet,**
**dass** das Griffelement (16) mittels einer Positioniereinrichtung (42) festgehalten wird und der Stab (14) relativ zum Griffelement (16) bewegt wird,
wobei auf das Griffelement ausgeübte axiale Kräfte von einer zweiten Abstützeinrichtung (46) abgestützt werden.

18. Trainingsgerät mit einem flexiblen Stab (14) und einem darauf angebrachten Griffelement (16), welches nach dem Verfahren nach einem der Ansprüche 16 oder 17 hergestellt ist.

19. Trainingsgerät nach Anspruch 18,
**dadurch gekennzeichnet,**
**dass** an den Enden des flexiblen Stabs (14) Endstücke (15) vorgesehen sind.

20. Trainingsgerät nach Anspruch 19,
**dadurch gekennzeichnet,**
**dass** die Endstücke (15) nicht austauschbar an den Enden des flexiblen Stabs (14) befestigt sind.
